Europäisches Patentamt

European Patent Office

Office européen des brevets

(11) Veröffentlichungsnummer: **0 198 371**

**A1**

(12) **EUROPÄISCHE PATENTANMELDUNG**

(21) Anmeldenummer: 86104682.9

(22) Anmeldetag: 05.04.86

(51) Int. Cl.4: **G03G 15/00 , G03B 27/62**

(30) Priorität: 13.04.85 DE 3513331

(43) Veröffentlichungstag der Anmeldung:
**22.10.86 Patentblatt 86/43**

(84) Benannte Vertragsstaaten:
**AT DE FR GB IT NL**

(71) Anmelder: **Standard Elektrik Lorenz Aktiengesellschaft**
**Lorenzstrasse 10**
**D-7000 Stuttgart 40(DE)**
Anmelder: **International Standard Electric Corporation**
**320 Park Avenue**
**New York New York 10022(US)**

(72) Erfinder: **Frick, Gerhard**
**Vogelsang 11**
**D-7531 Ölbronn-Dürrn 1(DE)**
Erfinder: **Gaissert, Heinz**
**Keplerweg 5**
**D-7534 Birkenfeld(DE)**

(74) Vertreter: **Graf, Georg Hugo, Dipl.-Ing. et al**
**c/o Standard Elektrik Lorenz AG Patent- und Lizenzwesen Postfach 300 929 Kurze Strasse 8**
**D-7000 Stuttgart 30(DE)**

(54) **Bearbeitungsstation für einen Aufzeichnungsträger.**

(57) Die Bearbeitungsstation besteht aus einer gehäuseseitigen Platte (1) mit eingelassener Glasplatte (3), unter der sich z.B. eine nicht dargestellte Abtasteinrichtung befindet, und einer auf der Platte - (1) schwenkbar angeordneten Transporteinrichtung - (20). Die Transporteinrichtung (20) hat ein um eine Antriebswalze (11) und eine Umlenkwalze (12) gespanntes Transportband(13), durch das ein Aufzeichnungsträger in die Bearbeitungslage eingezogen wird. Die Platte (1) hat auf der Einzugseite eine Auflage (4), die in Einzugrichtung eine nach unten gerichtete Stufe bildet. Der Aufzeichnungsträger wird soweit eingezogen, daß seine Hinterkante in einen Abstand zur Stufe liegt. Durch Umkehr der Transportbewegung wird der Aufzeichnungsträger gegen die Stirnseite der Stufe zur Anlage gebracht und ausgerichtet. Eine Andruckplatte (17) sorgt für eine gute Haftung zwischen dem Band (20) und dem Aufzeichnungsträger. Nach der Bearbeitung wird der Aufzeichnungsträger in gleicher Richtung wie beim Einzug aus der Station herausbewegt. Zum Einlegen von Hand ist die Transporteinrichtung (20) um die Antriebswalze (11) hochklappbar.

Fig. 2

Bearbeitungsstation für einen Aufzeichnungsträger

Die Erfindung betrifft eine Bearbeitungsstation gemäß dem Oberbegriff von Anspruch 1.

Derartige Bearbeitungsstationen werden bei vielen Kopier-und artverwandten Geräten verwendet. Es kann nur jeweils ein blattförmiger Aufzeichnungsträger bis zu einem vorgegebenen Format automatisch eingezogen werden. Um jedoch auch ein Kopieren oder Bearbeiten z.B. von Seiten eines Buches oder eines Ausschnitts aus einer Vorlage größeren Formats zu ermöglichen, ist die Transporteinrichtung um eine parallel zur Bandlaufrichtung verlaufende Seitenkante schwenkbar gelagert, so daß sie hochklappbar ist. In diesem Zustand ist ein Einlegen beliebig dicker und großformatiger Vorlagen von Hand möglich.

Bei einer bekannten Kopiermaschine, Typ UBix 330 RE, wird der zu bearbeitende Aufzeichnungsträger bis zur Anlage an Anschlägen in die Bearbeitungsposition eingezogen. Zum Herausfördern des bearbeiteten Aufzeichnungsträgers werden die Anschläge abgesenkt. Die Anschläge sind im Bereich des Transportbandes angeordnet. Daher ist dieses in mehrere schmale Bänder unterteilt, zwischen denen ein den Anschlä gen entsprechender Abstand besteht. Schmale Niederhalter sorgen dafür, daß die Bänder zumindest im Bereich der Niederhalter fest auf dem Aufzeichnungsträger aufliegen. Bei dünnen Aufzeichnungsträgern und einer empfindlichen Abtasteinrichtung zeichnen sich die Abstände zwischen den Bändern wegen des dunkleren Hintergrundes als graue Streifen auf der Kopie ab.

Bei einer anderen bekannten Kopiermaschine, Typ Oce 1900 DF, ist das Transportband einteilig. Der Einzug des zu bearbeitenden Aufzeichnungsträgers in die Bearbeitungslage erfolgt ohne zusätzliche Hilfsmittel durch einen vorgegebenen Bandvorschub. Dieses setzt stets gleichbleibende Reibungsverhältnisse zwischen dem Transportband und dem Aufzeichnungsträger einerseits und dem Aufzeichnungsträger und der Gegenplatte andererseits voraus. Dieses ist nur durch eine in gewissen Zeitabständen erforderliche Reinigung des Bandes und einer oftmaligen Behandlung der Oberfläche der Gegenplatte mit einem Gleitmittel einzuhalten. Ein schmaler Niederhalter sorgt für die Auflage des Bandes auf dem Aufzeichnungsträger.

Die Aufgabe der Erfindung besteht darin, eine Bearbeitungsstation der genannten Art für Kopier- und artverwandte Geräte zu schaffen, die einfach aufgebaut ist und eine exakte Positionierung des zu bearbeitenden Aufzeichnungsträgers in die Bearbeitungslage ermöglicht.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß die Stufe in der Platte in Verbindung mit der Umsteuerung der Bandlaufrichtung eine einfache Maßnahme zur exakten Positionierung eines Aufzeichnungsträgers ist, daß dadurch ein einteiliges Transportband verwendet werden kann, daß das Transportband im Bearbeitungsbereich durch die Andruckplattte flächig auf dem Aufzeichnungsträger aufliegt und daß die schwenkbare Lagerung der Transporteinrichtung um die Antriebswalze eine Anordnung des Antriebsmotors im Gerät ermöglicht, wodurch die Transporteinrichtung einfach und relativ flach ausgebildet werden kann.

Anhand eines Ausführungsbeispiels wird die Erfindung in Verbindung mit den Zeichnungen nachfolgend näher erläutert. Es zeigt:

Figur 1 eine Bearbeitungsstation gemäß der Erfindung in Draufsicht.

Figur 2 die Bearbeitungsstation gemäß Figur 1 im Schnitt II-II in vereinfachter Darstellung.

Figur 3a und 3b einen Ausschnitt der Figur 2 in vergrößerter Darstellung in unterschiedlichen Betriebszuständen.

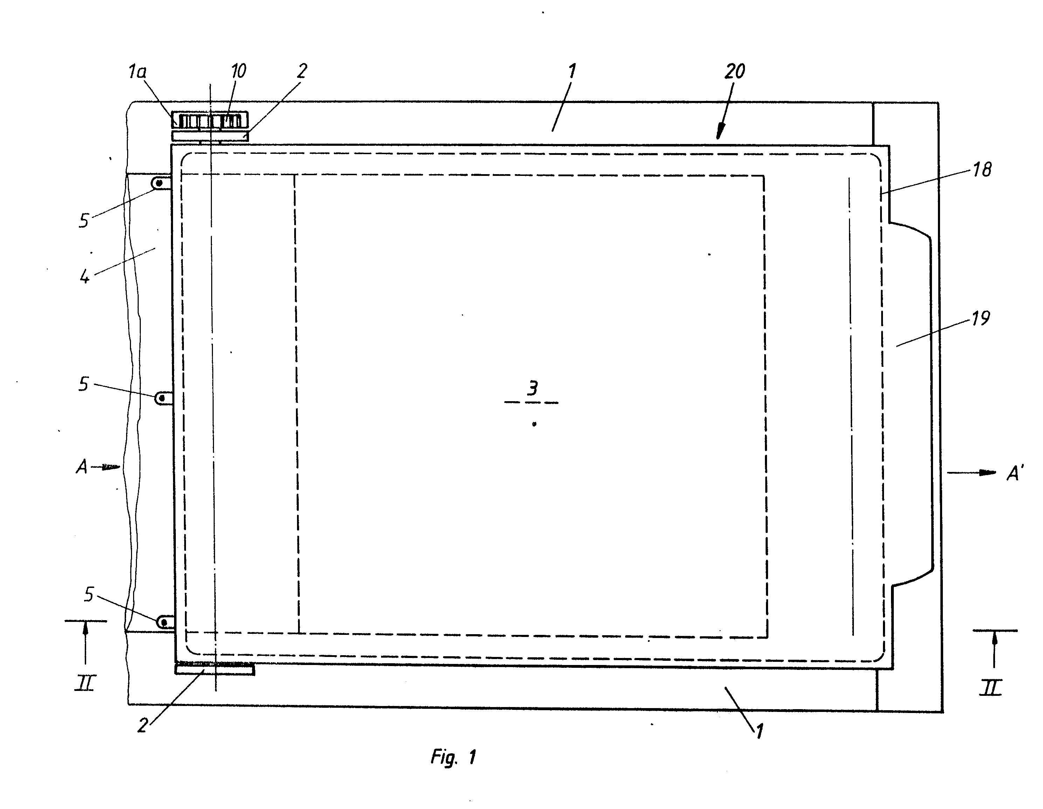

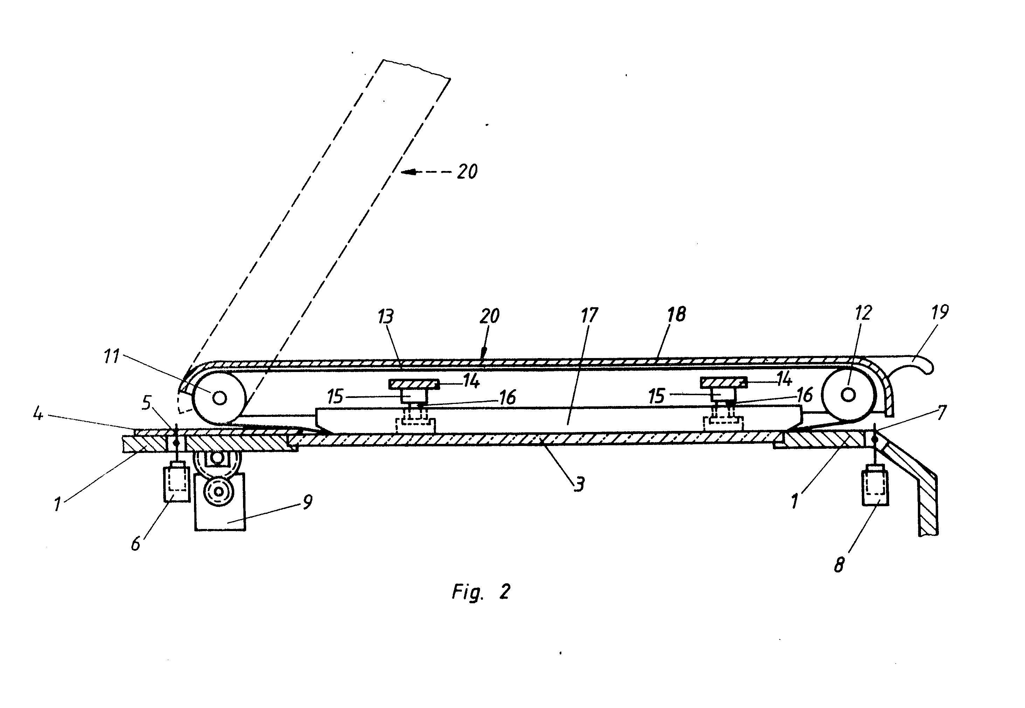

Figur 1 zeigt die Bearbeitungsstation, nämlich die Abtaststation eines Fernkopiergerätes, in Draufsicht und Figur 2 im Schnitt II-II. Sie besteht aus den in den Figuren gezeigten Teilen und einem nicht dargestellten optischen Abtaster. Der dargestellte Teil der Bearbeitungsstation besteht im wesentlichen aus einer Platte 1, die gleichzeitig die Oberseite des Gerätegehäuses ist, und einer Transporteinrichtung 2o, die in Lagerstützen 2 schwenkbar auf der Platte 1 angeordnet ist. Ein in Pfeilrichtung A zugeführter Aufzeichnungsträger betätigt je nach Breite und Lage mindestens einen von mehreren Papierführern 5, die eine Lichtschranke 6 steuern, über die der Antrieb der Transporteinrichtung 20 eingeschaltet wird. Der Aufzeichnungsträger wird in nachfolgend noch näher beschriebener Weise in Pfeilrichtung A in eine definierte Bearbeitungslage eingezogen, in der er mit der Schriftseite nach unten auf einer in die Platte 1 oberflächenbündig eingelassenen Glasplatte 3 liegt. Nach erfolgter Abtastung wird der Aufzeichnungsträger durch die Transporteinrichtung 20 in Pfeilrichtung A' aus der Bearbeitungsstation herausbewegt.

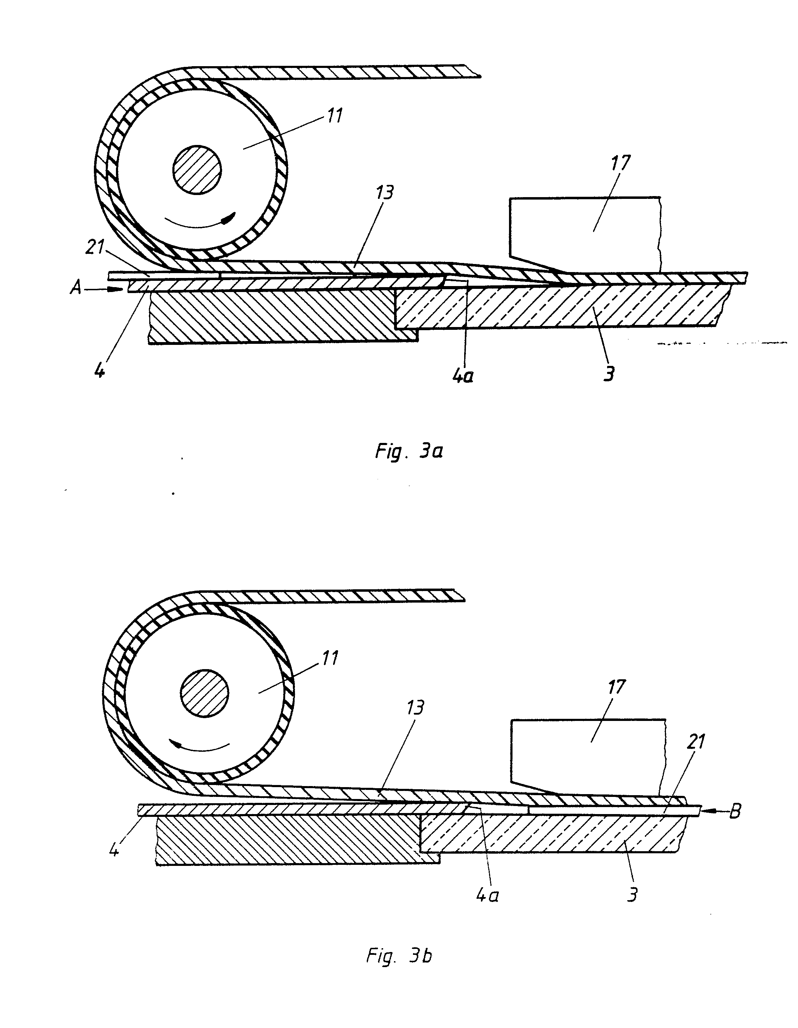

Auf der Einzugseite ist die Platte 1 mit einer Auflage 4 versehen, die ein Stück über die Glasplatte 3 ragt und eine nach unten gerichtete Stufe über die Breite der Glasplatte 3 bildet (Figur 1). Die Materialstärke der Auflage 4 ist mindestens gleich der maximal zulässigen Dicke eines Aufzeichnungsträgers, wobei die die Stufe bildende Stirnseite 4a nach rückwärts abgeschrägt ist, wie die Figuren 3a und 3b erkennen lassen. Unmittelbar vor und unmittelbar nach der Transporteinrichtung 20 ragen durch Öffnungen in der Platte 1 und der Auflage 4 von unten Papierfühler 5 und 7 in die Aufzeichnungsträgerbahn. Hinter den Papierfühlern 7 fällt die Gegenplatte 1 schräg ab, wodurch sichergestellt wird, daß die nach der Abtastung aus der Bearbeitungsstation herausgeschobenen Aufzeichnungsträger selbsttätig in einen nicht dargestellten Auffangkorb gleiten. Die Papierfühler steuern Lichtschranken 6 bzw. 8, über die ein Schrittmotor 9 ein-und ausgeschaltet wird. Der Schrittmotor 9 steht mit einem Ritzel über ein Zwischenzahnrad, das durch eine Öffnung 1a der Gegenplatte 1 ragt, in Eingriff mit einem Zahnrad 10, das auf der Welle einer Antriebswalze 11 befestigt ist. Die Antriebswalze 11 ist über ihre Welle in den Stützen 2 (Figur 1) drehbar gelagert. Auf der Welle ist gleichzeitig ein nicht dargestellter Schwenkrahmen als Bestandteil der Transporteinrichtung 20 gelagert. Im Schwenkrahmen ist am entgegengesetzten Ende zur Antriebswalze 11 eine Umlenkwalze 12 drehbar gelagert. Um die Walzen 11 und 12 ist ein endloses Transportband 13 gespannt, das mindestens so breit ist wie die Glasplatte 3. Der Schwenkrahmen hat innerhalb der Bandschleife Quertraversen 14, an denen eine Andruckplatte 17 durch Bundschrauben 16 quer zur Bandlaufrichtung zwischen Anschlägen frei beweglich geführt ist. Die Platte 17 hat zwischen den in die Unterseite eingelassenen Köpfen der Schrauben 16 und elastischen Anschlägen 15 ein der maximalen Dicke eines Aufzeichnungsträgers entsprechendes Spiel. In der in Figur 2 dargestellten Betriebslage der Transporteinrichtung 20 liegt die Andruckplatte 17 mit ihrem Eigengewicht auf der Innenseite des Transportbandes 13 auf und drückt dieses gegen die Glasplatte 3. Im hochgeklappten Zustand der Transporteinrichtung 20, in Figur 2 strichliniert dargestellt, wird das Transportband 13 durch die Auflage der Andruckplatte 17 an den Köpfen der Bundschrauben 16 entlastet. Die Enden der Andruckplatte 17 sind zur Bandschonung an der Unterseite abgeschrägt, wobei die Unterseite aus dem gleichen Grund mit einer Gleitschicht, z.B. aus Teflon, versehen ist. Die Transporteinrichtung 20 ist mit einer Abdeckung 18 versehen, die zum Hochklappen einen Griff 19 hat.

Sollen Vorlagen abgetastet werden, die dicker oder größer als ein blattförmiger Aufzeichnungsträger vorgegebenen Formats sind, wie z.B. Seiten aus einem Buch oder Ausschnitte aus großformatigen Zeichnungen, so kann die Transporteinrichtung 20 um die Antriebswalze 11 hochgeklappt werden. Danach kann die jeweilige Vorlage von Hand eingelegt und durch Anlage an der Stirnseite 4a der Auflage 4 ausgerichtet werden.

Nachfolgend wird anhand der Figur 2 und der Figuren 3a und 3b, die einen Ausschnitt der Figur 2 in vorgrößerter Darstellung in verschiedenen Betriebszuständen zeigen, der Ablauf des Einzugs eines Aufzeichnungsträgers in die Bearbeitungsstation näher erläutert.

Zum Einziehen eines Aufzeichnungsträgers 21 (Figur 3)in die Station gemäß Figur 2 wird dieser von links zugeführt. Durch die Vorderkante des Aufzeichnungsträgers 21 werden die Papierfühler 5 betätigt, über deren zugehörige Lichtschranke 6 der Schrittmotor 9 so angesteuert wird, daß die Antriebswalze 11 im Gegenuhrzeigersinn zu drehen beginnt, wie in Figur 3a gezeigt. Dadurch läuft auch das Transportband 13 in gleicher Richtung um. Von diesem wird der inzwischen weiter eingeschobene Aufzeichnungsträger 21 erfaßt und über die durch die Auflage 4 gebildete Stufe soweit in die Bearbeitungsstation eingezogen, daß zwischen der Hinterkante des Aufzeichnungsträgers 21 und der Stufe ein Abstand besteht, wie Figur 3b es zeigt. Die Freigabe der Papierfühler 5 durch die Hinterkante des Aufzeichnungsträgers 21 bewirkt über die Lichtschranke 6 eine Signalgabe, die ein Abschalten des Motors 9 nach einer vorgegebenen Zeit bewirkt. Dieser Zeitraum ist so bemessen, daß der Abstand zwischen der durch die Auflage 4 gebildeten Stufe und dem Aufzeichnungsträger 21 je nach den herrschenden Reibungsverhältnissen zwischen dem Transportband 13 und dem Aufzeichnungsträger 21 einerseits und dem Aufzeichnungsträger 21 und der Glasplatte 3 andererseits mehr oder weniger groß ist. Diesen Betriebszustand zeigt Figur 3b. Unmittelbar nach dem Abschalten wird der Motor 9 zeitlich begrenzt in entgegengesetzter Drehrichtung angesteuert. Dadurch wird die Antriebswalze 11 im Uhrzeigersinn angetrieben. Über das entsprechend umlaufende Transportband 13 wird der Aufzeichnungsträger 21 in Pfeilrichtung B mitgenommen und gelangt dadurch zur Anlage an der Stirnseite 4a der Auflage 4. Bei schräg eingezogenem Aufzeichnungsträger 21 erfolgt gleichzeitig seine Ausrichtung. Durch die schräge Stirnseite 4a wird die Anlagekante des Aufzeichnungsträgers 21 nach unten gegen die Glasplatte 3 gedrückt und dadurch vom Transportband 13 gelöst. In dieser Lage befindet sich der Aufzeichnungsträger 21 in der vorgeschriebenen Bearbeitungslage. Mit dem Anschlag des Aufzeichnungsträgers 21 wird dieser in seiner Bewegung gestoppt, während das Transportband 13 sich noch ein Stück weiterbewegt. Die dabei auftretende Gleitreibung zwischen Band und Aufzeichnungsträger ist zu gering, um ein Stauchen zu verursachen. Ein bei dünnen Aufzeichnungsträgern mögliches Aufwölben wird durch die bis dicht an die Stufe reichende Andruckplatte 17 unterbunden. Nach der Abtastung wird der Motor 9 zum Herausbefördern des Aufzeichnungsträgers 21 aus der Bearbeitungsstation wieder so angesteuert daß die Antriebswalze 11 und das Transportband 13 im Gegenuhrzeigersinn umlaufen. Der dadurch in Pfeilrichtung A' (Figur 1) bewegte Aufzeichnungsträger 21 betätigt mit seiner Vorderkante über die Papierfühler 7 (Figur 2) die Lichtschranke 8. Die Freigabe der Papierfühler 7 (Figur 2) durch den herausgeförderten Aufzeichnungsträger 21 löst über die Lichtschranke 8 das Abschalten des Motors 9 aus.

## Ansprüche

1. Bearbeitungsstation für einen Aufzeichnungsträger mit einer Transporteinrichtung, bestehend aus einem Schwenkrahmen mit Abdeckung, in dem eine Antriebswalze und eine Umlenkwalze für ein endloses Transportband gelagert sind, bei der der Aufzeichnungsträger zwischen dem Transportband und einer Platte eingezogen und nach der Bearbeitung in gleicher Richtung herausbewegt wird,

**dadurch gekennzeichnet ,**

daß die Platte (1) auf der Einzugseite eine nach unten gerichtete Stufe hat und daß die Transporteinrichtung (20) wie folgt gesteuert wird:

-Umlauf des Transportbandes (13) in Einzugrichtung so lange, bis sich die hintere Kante des Aufzeichnungsträgers (21) in einem Abstand hinter der Stufe befindet.

-Umlauf des Transportbandes (13) in Gegenrichtung so lange, bis das Band einen Weg zurückgelegt hat, der länger als der Abstand ist,

-nach der Bearbeitung des Aufzeichnungsträgers (30) Umlauf des Transportbandes (13) in Einzugsrichtung bis der Aufzeichnungsträger (21) die Bearbeitungsstation verlassen hat.

2. Bearbeitungsstation nach Anspruch 1, dadurch gekennzeichnet, daß die Höhe der Stufe mindestens gleich der maximal zulässigen Dicke eines Aufzeichnungsträgers (21) ist und daß die Stirnseite der Stufe abgeschrägt ist.

3. Bearbeitungsstation nach Anspruch 1 oder 2, dadurch gekennzeichnet, daß die Stufe durch eine Auflage (4) auf der Platte (1) gebildet wird, daß in die Platte (1) oberflächenbündig eine Glasplatte (3) eingelassen ist und daß die Auflage (4) über die zur Einzugseite weisende Kante der Glasplatte (3) ragt.

4. Bearbeitungsstation nach Anspruch 1, dadurch gekennzeichnet, daß die Transporteinrichtung (20) innerhalb der durch das Transportband (13) gebildeten Schleife eine senkrecht zur Bandlaufrichtung zwischen Anschlägen frei beweglich gelagerte Andruckplatte (17) für den unteren Bandteil hat, deren Berührungsfläche mit der Innenseite des Transportbandes (13) eine Gleitschicht hat.

5. Bearbeitungsstation nach Anspruch 4, dadurch gekennzeichnet, daß die Andruckplatte (17) mindestens an dem zur Einzugseite weisenden Ende abgeschrägt ist.

6. Bearbeitungsstation nach Anspruch 1, dadurch gekennzeichnet, daß in Einzugrichtung vor und nach der Transporteinrichtung (20) mindestens je eine Lichtschranke (5, 6 und 7, 8) angeordnet sind.

7. Bearbeitungsstation nach Anspruch 1, dadurch gekennzeichnet, daß die Transporteinrichtung (20) um die Antriebswalze (11) schwenkbar ist.

Fig. 1

0 198 371

Fig. 2

Fig. 3a

Fig. 3b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 902 112 (XEROX CORPORATION) * Patentansprüche 1,7,8; Seite 5, Zeile 16 - Seite 6, Zeile 7; Figuren 3,4 * --- | 1,7 | G 03 G 15/00 G 03 B 27/62 |
| X | US-A-3 504 908 (J.R. KRUEGER) * Spalte 3, Zeile 66 - Spalte 4, Zeile 16; Patentanspruch 1; Figuren 3,4 * --- | 1,7 | |
| X | XEROX DISCLOSURE JOURNAL, Band 7, Nr. 1, Januar/februar 1982, Seite 35, Stamford, Connecticut, US; M. SILVERBERG: "Trail edge document registration" * Insgesamt * --- | 1 | |
| A | EP-A-0 064 591 (INTERNATIONAL BUSINESS MACHINES CORPORATION) * Seite 2, Zeile 25 - Seite 3, Zeile 9; Figur 1 * --- | 1,6 | **RECHERCHIERTE SACHGEBIETE (Int. Cl.4)** <br> G 03 G 15 <br> G 03 B 27 |
| A | XEROX DISCLOSURE JOURNAL, Band 4, Nr. 3, Mai/Juni 1979, Seite 337, Stamford, Connecticut, US; W.R. HUNT: "Document registration guide to avoid shadow effect" * Figuren 1,2 * --- -/- | 1,3 | |

Der vorliegende Recherchenbericht wurde für alle Patentansprüche erstellt.

| Recherchenort DEN HAAG | Abschlußdatum der Recherche 16-07-1986 | Prüfer CIGOJ P.M. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 056 954 (XEROX CORPORATION)<br>* Seite 3, Zeilen 71-81; Figuren 1,3 *<br>---<br>----- | 1,4 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 16-07-1986 | CIGOJ P.M. |